# EUROPEAN PATENT SPECIFICATION

(11) **EP 4 477 844 B1**
(45) Date of publication and mention of the grant of the patent: **02.12.2026**
(21) Application number: 24210945.2
(22) Date of filing: 19.01.2018
(51) Int. Cl.: F01D 5/18

(54) **TRAILING EDGE CONFIGURATION WITH CAST SLOTS AND DRILLED FILMHOLES**
HINTERKANTENKONFIGURATION MIT GEGOSSENEN SCHLITZEN UND GEBOHRTEN FILMLÖCHERN
CONFIGURATION DE BORD DE FUITE AVEC FENTES COULÉES ET TROUS DE FILM PERCÉS

(30) Priority: 19.01.2017 US 201715409613
(43) Date of publication of application: 18.12.2024
(62) Document number(s) of the earlier application(s) in accordance with Art. 76 EPC: 18152646.8 / 3 351 731
(73) Proprietor: RTX Corporation, Farmington, CT 06032 (US)
(72) Inventor: SPANGLER, Brandon W., Vernon, 06066 (US)
(74) Representative: Dehns

(56) References cited:
- EP-A1- 1 923 152
- US-A1- 2001 012 484
- US-A1- 2010 329 835
- US-B1- 7 980 821

## Description

### BACKGROUND OF THE INVENTION

Gas turbine engines typically include a fan delivering air into a compressor. The air is compressed in the compressor and delivered into a combustion section where it is mixed with fuel and ignited. Products of this combustion pass downstream over turbine blades, driving them to rotate. Turbine rotors, in turn, drive the compressor and fan rotors. A turbine section typically includes multiple stages of vanes and rotor blades use to extract a maximum amount of energy from the combustion flow. The efficiency of the engine is impacted by ensuring that the products of combustion pass in as high a percentage as possible across the turbine blades.

With each new engine design, gas temperatures increase and cooling flow requirements decrease. This requires cooling flow to be utilized in a more efficient manner and flow distribution to be tailored to prevent overcooling in certain regions. Because of radial gas temperature profiles, trailing edges of airfoils are a region where cooling flow distribution could be tailored and overall flow reduced. However, current cast trailing edges are already at the minimum area required to prevent core break during the casting process and thus do not allow a reduction or redistribution of flow. One option would be to replace cast trailing edge slots with drilled filmholes to allow a redistribution and reduction of cooling flow. However, this presents manufacturing challenges in the casting process resulting in an undesirable increase in variation of core position and wall thicknesses.

US 2010/329835 A1 discloses a prior art airfoil with hybrid drilled and cutback trailing edge.

### SUMMARY OF THE INVENTION

In an aspect of the present invention, a gas turbine engine component is provided according to claim 1.

In another aspect of the present invention, a method of manufacturing a gas turbine engine component is provided according to claim 8.

Features of embodiments of the invention are set forth in the dependent claims.

These and other features may be best understood from the following drawings and specification.

### BRIEF DESCRIPTION OF THE DRAWINGS

Figure 1 is a schematic representation of one example of a gas turbine engine.
Figure 2 is a schematic view of blades and a vane that incorporates the subject invention.
Figure 3 is a side view of the vane of Figure 2.
Figure 3A is a section view of a cast slot.
Figure 3B is a section view of a drilled filmhole.
Figure 4 is an example of radially inner slots and radially outer filmholes.
Figure 5 is an example of interspersed slots and filmholes.
Figure 6 is another example of interspersed slots and filmholes.
Figure 7 is an example of the subject invention as used in a blade.

### DETAILED DESCRIPTION

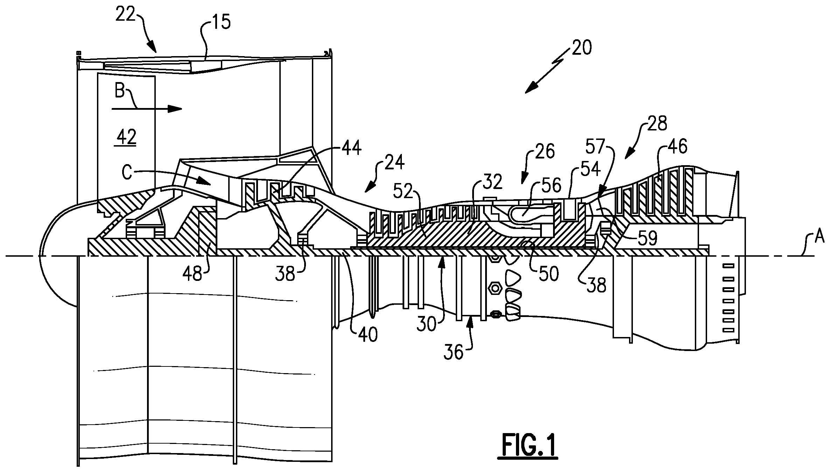

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a second (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a first (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s).

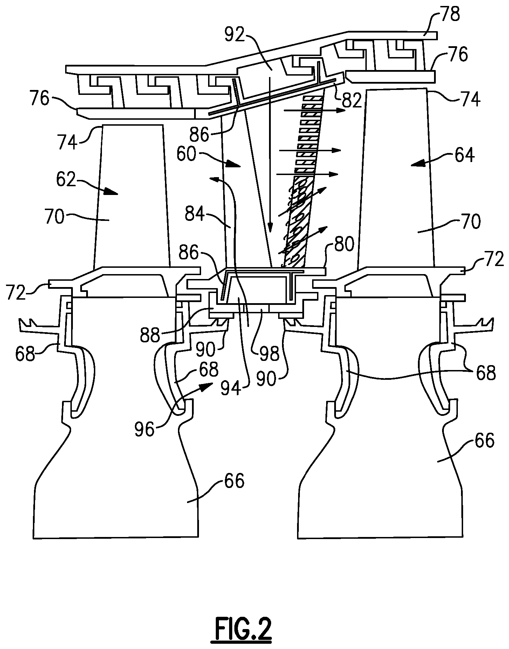

Figure 2 shows a vane 60 positioned between a first blade 62 and a second blade 64 in the turbine section 28. In one example, the blades 62, 64 are attached to a full hoop disk 66 with fore and aft coverplates 68. The disks 66 are driven by a turbine rotor about the engine center axis A. Airfoil bodies 70 extend from a radially inward platform 72 of blades 62,64 to a tip 74. Blade outer air seals (BOAS) 76 are mounted to a radially outer full hoop case 78 and are spaced from the tips 74 by a small clearance gap as known.

The vane 60 includes a radially inner platform 80, a radially outward platform 82, and an airfoil body 84 extending between the radially inner platform 80 and radially outer platform 82. The vane 60 is coupled to the full hoop case 78 at the radially outer platform 82 and includes feather seals 86 between vane segments at the radially inner platform 80 and radially outer platform 82. A full hoop inner air seal 88 is coupled to the radially inner platform 80 and cooperates with seals 90 on the coverplates 68 of the blades 62, 64.

Between the full hoop case 78 and the radially outer platform 82 is a vane outer diameter cavity 92, and between the radially inner platform 80 and the inner air seal 88 is a vane inner diameter cavity 94. Radially inward of the inner air seal 88 and between the disks 66 is a rotor cavity 96. One or more orifices 98 are formed in the inner air seal 88 to direct flow into the vane inner diameter cavity 94. Cooling flow is also directed into the vane outer diameter cavity 92 as known.

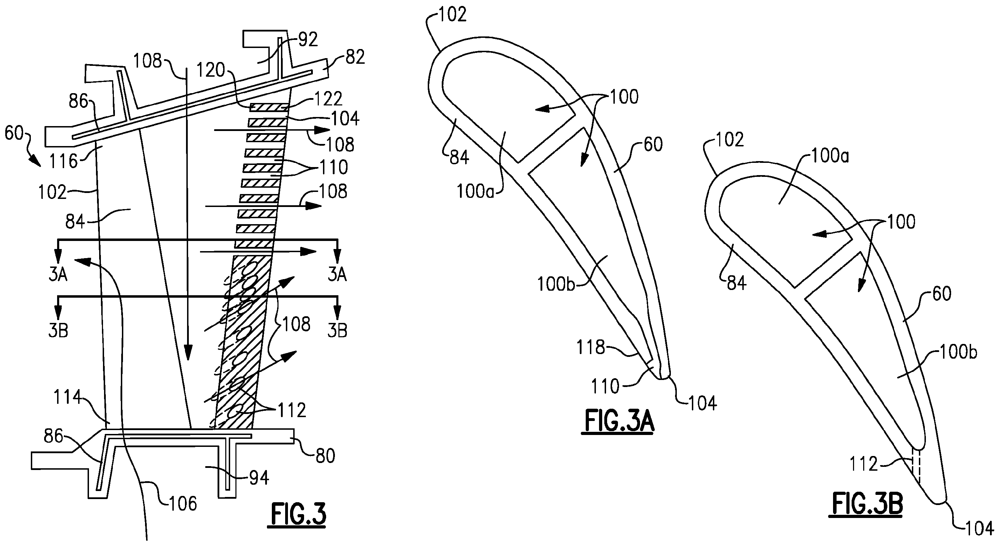

Cooling channels 100 (Figure 3A and 3B) are formed within the vane 60 to receive the cooling air flow. The airfoil body 84 of the vane 60 extends from a leading edge 102 to a trailing edge 104. In the example shown in Figure 3, the air flow from the vane inner diameter cavity 94 is directed into a fore inner cooling channel 100a and is directed out from the airfoil body 84 via the leading edge 102 as indicated by arrow 106. The air from the vane outer diameter cavity 92 is directed into an aft inner cooling channel 100b and is directed out from the airfoil body 84 via the trailing edge 104 as indicated by arrows 108.

With each new engine design, gas temperatures increase and cooling flow requirements decrease. This requires cooling flow to be utilized in a more efficient manner and flow distribution to be tailored to prevent overcooling in certain regions. Because of radial gas temperature profiles, trailing edges of airfoils is an area where cooling flow distribution could be tailored and overall flow reduced. However, current cast trailing edges are already at the minimum area required to prevent core break during the casting process and thus do not allow a reduction or redistribution of flow.

A casting process uses a core to form open internal areas within a component. The core is positioned in a die and material is supplied to the die to flow around the core to cast the component. Once the component is cast the core is removed to provide the open areas within the component. As known, the casting process requires a certain core area to make sure the core remains intact during the process. For a cast airfoil body, the trailing edge includes a plurality of cast slots that extend from the inner diameter to the outer diameter. The slots are formed to be at the minimum size that is required to prevent core break during the casting process. Further, the structure on the core used to form the slots helps position the core during the casting process. The resulting component includes cast slots for the entire radial span which results in excess cooling flow. Further, as the cast slots are the same along the radial span there is uniform cooling flow that is not tailorable to address hotter areas of the airfoil body. Replacing the cast trailing edge slots with drilled filmholes provides more tailoring to allow a redistribution and reduction of cooling flow. However, as discussed above, the cast trailing edge slots help position the core during the casting process and removing them would result in larger variation of the core position and in wall thicknesses.

The subject invention provides a configuration where the airfoil body 84 includes one or more cast slots 110 formed in the trailing edge 104 and one or more drilled cooling holes 112. The cast slots 110 and drilled filmholes 112 direct flow from the internal channel 100b to an external location of the body 84. The cast slots 110 are formed by core structures that are used to position the core during casting; however, drilled filmholes 112 are machined subsequent to casting to reduce excess cooling flow and to tailor flow to cool hotter areas of the body 84.

As shown in Figure 3, the airfoil body 84 extends from a radially inner end 114 to a radially outer end 116. In one example, the cast slots 110 are positioned radially outward of the drilled filmholes 112. A section of a cast slot 110 is shown in Figure 3A and a section of a drilled filmhole 112 is shown in Figure 3B. The cast slot 110 extends from the internal channel 100b to an external surface 118 of the airfoil body 84. The cast slots 110 have a length that is greater than a width and extend from an inner slot end 120 to an outer slot end 122 at the external surface 118. The slots 110 can be located anywhere along the radial span of the airfoil body 84. The slots 110 can be the same length or variable lengths relative to each other.

The drilled filmhole 112 extends from the internal channel 100b to the external surface 118. The filmholes 112 can have different shapes and/or sizes and can be located anywhere along the radial span of the airfoil body 84. Further, the filmholes 112 can be orientated at different angles relative to the slots 110 and/or body surface.

In one example, an axial direction is defined in a direction extending from the leading edge 102 to the trailing edge 104, which is a direction that is common with the engine center axis A. A radial direction is defined as a direction that is perpendicular to the axial direction, and which extends radially outward from the center axis A. The cast slots 110 extend generally in the axial direction and the drilled filmholes 112 extend at an obtuse angle relative to the axially extending cast slots 110. In other words, the filmholes 112 are orientated to be neither perpendicular nor parallel to the cast slots 110. The filmholes 112 can be orientated at any of various angles to tailor cooling flow as needed.

In the example shown in Figure 3, the cast slots 110 are positioned radially outward of the drilled filmholes 112. The cast slots 110 are spaced along the upper half of the radial span and the filmholes 112 are spaced along the lower half of the radial span. The cast slots 110 extend in an axial direction and the filmholes 112 are drilled at desired locations to tailor the flow to meet cooling flow requirements. In the example shown, the filmholes 112 extend from a fore hole end at a radial outward angle to an aft hole end. Further, filmholes 112 are more closely spaced together at the center of the body than at the radially inner end 114 to tailor cooling flow.

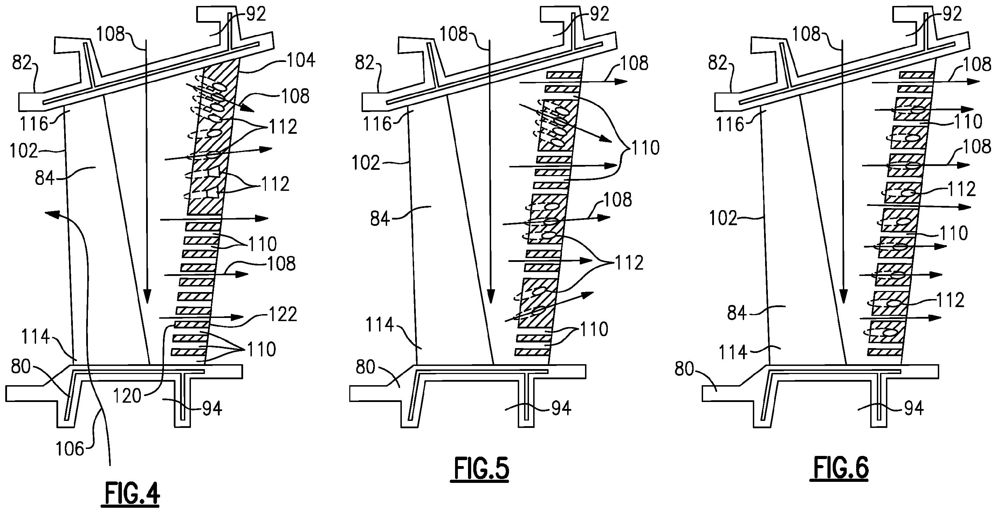

In the example shown in Figure 4, the cast slots 110 are positioned radially inward of the drilled filmholes 112. The cast slots 110 are spaced along the lower half of the radial span and the filmholes 112 are spaced along the upper half of the radial span. The cast slots 110 extend in an axial direction and the filmholes 112 are drilled at desired locations to tailor the flow to meet cooling flow requirements. In the example shown, some filmholes 112 extend from a fore hole end in a radial outward angle to an aft hole end, while other filmholes 112 extend from the fore hole end at a radial inward angle to an aft hole end. Further, filmholes 112 are more closely spaced together at the radially outer end 116 than at a center of the body.

In the examples shown in Figures 5 and 6, which fall outside the wording of the claims, the cast slots 110 are interspersed with the drilled filmholes 112 in the radial direction along the trailing edge 104 in various patterns. Further, the filmholes 112 have various shapes/sizes and are orientated at various angles relative to the axially extending cast slots 110.

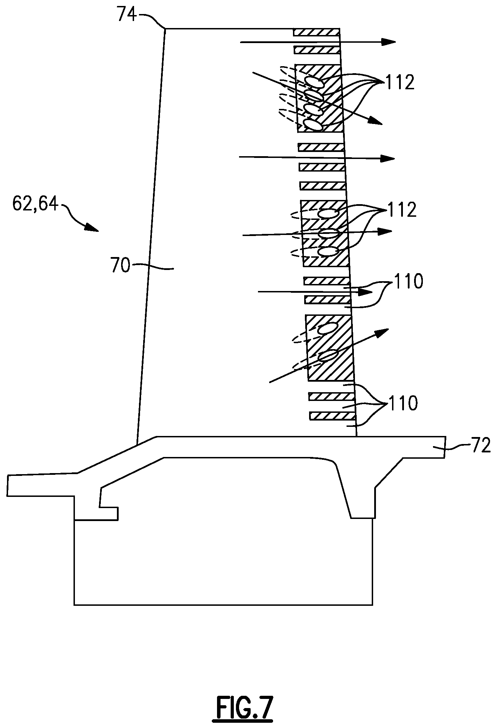

Figure 7 shows an example which also falls outside the wording of the claims, where the cast slots 110 and filmholes 112 are formed in a turbine blade 62, 64. Optionally, the cast slots 110 and filmholes 112 could be formed in a trailing edge of a BOAS 76 as shown in Figure 2.

The invention uses both cast trailing edge slots and drilled trailing edge filmholes to achieve a beneficial arrangement. The trailing edge slots are used where core positioning is required and drilled filmholes are used in areas where cooling flow can be reduced. The filmholes can have various sizes, shapes, and spacing in order to achieve the necessary requirements.

Although embodiments of this invention have been disclosed, a worker of ordinary skill in this art would recognize that certain modifications would come within the scope of this invention. For that reason, the following claims should be studied to determine the true scope and content of this invention.

## Claims

1. A gas turbine engine component (60) comprising:
a body (84) having a leading edge (102) and a trailing edge (104);
at least one internal channel (100) formed within the body (84), wherein the channel (100) includes an inlet to direct cooling flow into the body (84);
at least one cast slot (110) formed in the trailing edge (104); and
at least one drilled filmhole (112) formed in the trailing edge (104), wherein the cast slot (110) and drilled filmhole (112) direct flow from the internal channel (100) to an external location from the body (84),
wherein the at least one cast slot (110) comprises a plurality of cast slots (110), wherein the at least one drilled filmhole (112) comprises a plurality of drilled filmholes (112), wherein an axial direction is defined in a direction extending from the leading edge (102) to the trailing edge (104), and a radial direction is defined as a direction that is perpendicular to the axial direction, and wherein the body (84) extends from a radially inner end (114) to a radially outer end (116);
**characterised in that**:
the cast slots (110) are positioned radially outward of the drilled filmholes (112), wherein the cast slots (110) are spaced along the upper half of a radial span of the body (84) and the filmholes (112) are spaced along the lower half of the radial span of the body (84), and the filmholes (112) are more closely spaced together at the center of the body than at the radially inner end (114); or
the cast slots (110) are positioned radially inward of the drilled filmholes (112), wherein the cast slots (110) are spaced along the lower half of a radial span of the body (84) and the filmholes (112) are spaced along the upper half of the radial span of the body (84), and the filmholes (112) are more closely spaced together at the radially outer end (116) than at a center of the body.

2. The gas turbine engine component (60) according to any preceding claim, wherein the at least one cast slot (110) extends in a generally axial direction and the at least one drilled filmhole (112) extends at an obtuse angle relative to the at least one cast slot (110).

3. The gas turbine engine component (60) according to any preceding claim, wherein the body (84) comprises a vane, blade or BOAS.

4. The gas turbine engine component (60) according to any preceding claim, wherein the body (84) comprises a turbine component.

5. A gas turbine engine (60) comprising:
a compressor section (24) defining an engine center axis (A);
a combustor section (26) downstream of the compressor section (24); and
a turbine section (28) downstream of the combustor section (26), wherein the turbine section (28) includes the gas turbine engine component (60) of any preceding claim, the leading edge (102) extends to the trailing edge (104) to define an axial direction along the engine center axis (A), and the body (84) further comprises a radially inner end (114) extending to a radially outer end (116) to define a radial direction.

6. The gas turbine engine (60) according to claim 5, wherein the at least one cast slot (110) has a length greater than a width, and the length extends in the axial direction and the at least one drilled filmhole (112) extends along an obtuse angle relative to the at least one cast slot (110).

7. The gas turbine engine (60) according to claim 5 or 6, wherein the at least one cast slot (110) is configured to position a core during a casting process for the component (60).

8. A method of manufacturing a gas turbine engine component (60) comprising:
using a core to form at least one internal cooling channel (100) in a body (84), wherein the body (84) extends from a leading edge (102) to a trailing edge (104);
providing a plurality of slots with the core to be located at the trailing edge (104), wherein the slots position the core during a casting process and form cast slots (110) in the trailing edge (104); and
drilling a plurality of filmholes (112) in the trailing edge (104) subsequent to the casting process, wherein the cast slots (110) and filmholes (112) are configured to direct flow from the internal cooling channel (100) to an external location from the body (84),
wherein an axial direction is defined in a direction extending from the leading edge (102) to the trailing edge (104), and a radial direction is defined as a direction that is perpendicular to the axial direction, and wherein the body (84) extends from a radially inner end (114) to a radially outer end (116);
**characterised in that**:
the cast slots (110) are positioned radially outward of the drilled filmholes (112), wherein the cast slots (110) are spaced along the upper half of a radial span of the body (84) and the filmholes (112) are spaced along the lower half of the radial span of the body (84), and the filmholes (112) are more closely spaced together at the center of the body than at the radially inner end (114); or
the cast slots (110) are positioned radially inward of the drilled filmholes (112), wherein the cast slots (110) are spaced along the lower half of a radial span of the body (84) and the filmholes (112) are spaced along the upper half of the radial span of the body (84), and the filmholes (112) are more closely spaced together at the radially outer end (116) than at a center of the body.

9. The method according to claim 8, including:
forming the cast slots (110) to extend in the axial direction and forming the drilled filmholes (112) to extend at an obtuse angle relative to the cast slots (110).

10. The method according to claim 8 or 9, including tailoring filmhole sizes and spacing relative to the cast slots (110) to meet cooling flow requirements for a specified engine configuration.

## Patentansprüche

1. Eine Gasturbinentriebwerkskomponente (60), umfassend:
einen Körper (84) mit einer Vorderkante (102) und einer Hinterkante (104);
mindestens einen inneren Kanal (100), der innerhalb des Körpers (84) ausgebildet ist, wobei der Kanal (100) einen Einlass umfasst, um Kühlstrom in den Körper (84) zu leiten;
mindestens einen gegossenen Schlitz (110), der in der Hinterkante (104) ausgebildet ist;
und
mindestens eine gebohrte Filmbohrung (112), die in der Hinterkante (104) ausgebildet ist, wobei der gegossene Schlitz (110) und die gebohrte Filmbohrung (112) den Strom von dem inneren Kanal (100) zu einem äußeren Ort von dem Körper (84) leiten,
wobei der mindestens eine gegossene Schlitz (110) eine Vielzahl von gegossenen Schlitzen (110) umfasst, wobei die mindestens eine gebohrte Filmbohrung (112) eine Vielzahl von gebohrten Filmbohrungen (112) umfasst, wobei eine axiale Richtung in einer Richtung definiert ist, die sich von der Vorderkante (102) zur Hinterkante (104) erstreckt, und eine radiale Richtung als eine Richtung definiert ist, die zur axialen Richtung senkrecht ist, und wobei sich der Körper (84) von einem radial inneren Ende (114) zu einem radial äußeren Ende (116) erstreckt;
**dadurch gekennzeichnet, dass**:
die gegossenen Schlitze (110) radial außerhalb der gebohrten Filmbohrungen (112) positioniert sind, wobei die gegossenen Schlitze (110) entlang der oberen Hälfte einer radialen Spannweite des Körpers (84) beabstandet sind und die Filmbohrungen (112) entlang der unteren Hälfte der radialen Spannweite des Körpers (84) beabstandet sind, und die Filmbohrungen (112) in der Mitte des Körpers enger beabstandet sind als an dem radial inneren Ende (114); oder
die gegossenen Schlitze (110) radial innerhalb der gebohrten Filmbohrungen (112) positioniert sind, wobei die gegossenen Schlitze (110) entlang der unteren Hälfte einer radialen Spannweite des Körpers (84) beabstandet sind und die Filmbohrungen (112) entlang der oberen Hälfte der radialen Spannweite des Körpers (84) beabstandet sind, und die Filmbohrungen (112) an dem radial äußeren Ende (116) enger beabstandet sind als an einer Mitte des Körpers.

2. Die Gasturbinentriebwerkskomponente (60) gemäß einem der vorhergehenden Ansprüche, wobei sich der mindestens eine gegossene Schlitz (110) im Allgemeinen in axialer Richtung erstreckt und sich die mindestens eine gebohrte Filmbohrung (112) in einem stumpfen Winkel relativ zu dem mindestens einen gegossenen Schlitz (110) erstreckt.

3. Die Gasturbinentriebwerkskomponente (60) gemäß einem der vorhergehenden Ansprüche, wobei der Körper (84) eine Leitschaufel, eine Laufschaufel oder ein BOAS umfasst.

4. Die Gasturbinentriebwerkskomponente (60) gemäß einem der vorhergehenden Ansprüche, wobei der Körper (84) eine Turbinenkomponente umfasst.

5. Ein Gasturbinentriebwerk (60), umfassend:
einen Verdichterabschnitt (24), der eine Triebwerksmittelachse (A) definiert;
einen Brennkammerabschnitt (26) stromabwärts des Verdichterabschnitts (24); und
einen Turbinenabschnitt (28) stromabwärts des Brennkammerabschnitts (26), wobei der Turbinenabschnitt (28) die Gasturbinentriebwerkskomponente (60) gemäß einem der vorhergehenden Ansprüche umfasst, sich die Vorderkante (102) zur Hinterkante (104) erstreckt, um eine axiale Richtung entlang der Triebwerksmittelachse (A) zu definieren, und der Körper (84) ferner ein radial inneres Ende (114) umfasst, das sich zu einem radial äußeren Ende (116) erstreckt, um eine radiale Richtung zu definieren.

6. Das Gasturbinentriebwerk (60) gemäß Anspruch 5, wobei der mindestens eine gegossene Schlitz (110) eine Länge aufweist, die größer als eine Breite ist, und sich die Länge in axialer Richtung erstreckt und sich die mindestens eine gebohrte Filmbohrung (112) entlang eines stumpfen Winkels relativ zu dem mindestens einen gegossenen Schlitz (110) erstreckt.

7. Das Gasturbinentriebwerk (60) gemäß Anspruch 5 oder 6, wobei der mindestens eine gegossene Schlitz (110) dazu ausgebildet ist, einen Kern während eines Gießverfahrens für die Komponente (60) zu positionieren.

8. Ein Verfahren zur Herstellung einer Gasturbinentriebwerkskomponente (60), umfassend:
Verwenden eines Kerns, um mindestens einen inneren Kühlkanal (100) in einem Körper (84) auszubilden, wobei sich der Körper (84) von einer Vorderkante (102) zu einer Hinterkante (104) erstreckt;
Bereitstellen einer Vielzahl von Schlitzen mit dem Kern, die an der Hinterkante (104) angeordnet sein sollen, wobei die Schlitze den Kern während eines Gießverfahrens positionieren und gegossene Schlitze (110) in der Hinterkante (104) ausbilden; und
Bohren einer Vielzahl von Filmbohrungen (112) in der Hinterkante (104) nach dem Gießverfahren, wobei die gegossenen Schlitze (110) und die Filmbohrungen (112) dazu ausgebildet sind, den Strom von dem inneren Kühlkanal (100) zu einem äußeren Ort von dem Körper (84) zu leiten,
wobei eine axiale Richtung in einer Richtung definiert ist, die sich von der Vorderkante (102) zur Hinterkante (104) erstreckt, und eine radiale Richtung als eine Richtung definiert ist, die zur axialen Richtung senkrecht ist, und wobei sich der Körper (84) von einem radial inneren Ende (114) zu einem radial äußeren Ende (116) erstreckt;
**dadurch gekennzeichnet, dass**:
die gegossenen Schlitze (110) radial außerhalb der gebohrten Filmbohrungen (112) positioniert sind, wobei die gegossenen Schlitze (110) entlang der oberen Hälfte einer radialen Spannweite des Körpers (84) beabstandet sind und die Filmbohrungen (112) entlang der unteren Hälfte der radialen Spannweite des Körpers (84) beabstandet sind, und die Filmbohrungen (112) in der Mitte des Körpers enger beabstandet sind als an dem radial inneren Ende (114); oder
die gegossenen Schlitze (110) radial innerhalb der gebohrten Filmbohrungen (112) positioniert sind, wobei die gegossenen Schlitze (110) entlang der unteren Hälfte einer radialen Spannweite des Körpers (84) beabstandet sind und die Filmbohrungen (112) entlang der oberen Hälfte der radialen Spannweite des Körpers (84) beabstandet sind, und die Filmbohrungen (112) an dem radial äußeren Ende (116) enger beabstandet sind als an einer Mitte des Körpers.

9. Das Verfahren gemäß Anspruch 8, umfassend:
Ausbilden der gegossenen Schlitze (110), damit sie sich in axialer Richtung erstrecken, und Ausbilden der gebohrten Filmbohrungen (112), damit sie sich in einem stumpfen Winkel relativ zu den gegossenen Schlitzen (110) erstrecken.

10. Das Verfahren gemäß Anspruch 8 oder 9, umfassend das Abstimmen von Filmbohrungsgrößen und -abständen relativ zu den gegossenen Schlitzen (110), um Kühlstromanforderungen für eine festgelegte Triebwerkskonfiguration zu erfüllen.

## Revendications

1. Composant de moteur à turbine à gaz (60) comprenant :
un corps (84) ayant un bord d'attaque (102) et un bord de fuite (104) ;
au moins un canal interne (100) formé à l'intérieur du corps (84), dans lequel le canal (100) comprend une entrée pour diriger un flux de refroidissement dans le corps (84) ;
au moins une fente coulée (110) formée dans le bord de fuite (104) ; et
au moins un trou de film percé (112) formé dans le bord de fuite (104), dans lequel la fente coulée (110) et le trou de film percé (112) dirigent le flux provenant du canal interne (100) vers un emplacement extérieur au corps (84),
dans lequel la au moins une fente coulée (110) comprend une pluralité de fentes coulées (110), dans lequel le au moins un trou de film percé (112) comprend une pluralité de trous de film percés (112), dans lequel une direction axiale est définie dans une direction s'étendant du bord d'attaque (102) au bord de fuite (104), et une direction radiale est définie comme une direction perpendiculaire à la direction axiale, et dans lequel le corps (84) s'étend d'une extrémité radialement interne (114) à une extrémité radialement externe (116) ;
**caractérisé en ce que** :
les fentes coulées (110) sont positionnées radialement vers l'extérieur par rapport aux trous de film percés (112), dans lequel les fentes coulées (110) sont espacées le long de la moitié supérieure d'une étendue radiale du corps (84) et les trous de film (112) sont espacés le long de la moitié inférieure de l'étendue radiale du corps (84), et les trous de film (112) sont plus étroitement espacés au centre du corps qu'à l'extrémité radialement interne (114) ; ou
les fentes coulées (110) sont positionnées radialement vers l'intérieur par rapport aux trous de film percés (112), dans lequel les fentes coulées (110) sont espacées le long de la moitié inférieure d'une étendue radiale du corps (84) et les trous de film (112) sont espacés le long de la moitié supérieure de l'étendue radiale du corps (84), et les trous de film (112) sont plus étroitement espacés à l'extrémité radialement externe (116) qu'au centre du corps.

2. Composant de moteur à turbine à gaz (60) selon l'une quelconque des revendications précédentes, dans lequel la au moins une fente coulée (110) s'étend dans une direction généralement axiale et le au moins un trou de film percé (112) s'étend selon un angle obtus par rapport à la au moins une fente coulée (110).

3. Composant de moteur à turbine à gaz (60) selon l'une quelconque des revendications précédentes, dans lequel le corps (84) comprend une aube, une pale ou un BOAS.

4. Composant de moteur à turbine à gaz (60) selon l'une quelconque des revendications précédentes, dans lequel le corps (84) comprend un composant de turbine.

5. Moteur à turbine à gaz (60) comprenant :
une section de compresseur (24) définissant un axe central de moteur (A) ;
une section de chambre de combustion (26) en aval de la section de compresseur (24) ;
et
une section de turbine (28) en aval de la section de chambre de combustion (26), dans lequel la section de turbine (28) comprend le composant de moteur à turbine à gaz (60) selon l'une quelconque des revendications précédentes, le bord d'attaque (102) s'étend jusqu'au bord de fuite (104) pour définir une direction axiale le long de l'axe central de moteur (A), et le corps (84) comprend en outre une extrémité radialement interne (114) s'étendant jusqu'à une extrémité radialement externe (116) pour définir une direction radiale.

6. Moteur à turbine à gaz (60) selon la revendication 5, dans lequel la au moins une fente coulée (110) a une longueur supérieure à une largeur, et la longueur s'étend dans la direction axiale et le au moins un trou de film percé (112) s'étend selon un angle obtus par rapport à la au moins une fente coulée (110).

7. Moteur à turbine à gaz (60) selon la revendication 5 ou 6, dans lequel la au moins une fente coulée (110) est configurée pour positionner un noyau pendant un processus de coulée pour le composant (60).

8. Procédé de fabrication d'un composant de moteur à turbine à gaz (60) comprenant :
l'utilisation d'un noyau pour former au moins un canal de refroidissement interne (100) dans un corps (84), dans lequel le corps (84) s'étend d'un bord d'attaque (102) à un bord de fuite (104) ;
la fourniture d'une pluralité de fentes avec le noyau destinées à être situées au niveau du bord de fuite (104), dans lequel les fentes positionnent le noyau pendant un processus de coulée et forment des fentes coulées (110) dans le bord de fuite (104) ; et
le perçage d'une pluralité de trous de film (112) dans le bord de fuite (104) après le processus de coulée, dans lequel les fentes coulées (110) et les trous de film (112) sont configurés pour diriger le flux provenant du canal de refroidissement interne (100) vers un emplacement extérieur au corps (84),
dans lequel une direction axiale est définie dans une direction s'étendant du bord d'attaque (102) au bord de fuite (104), et une direction radiale est définie comme une direction perpendiculaire à la direction axiale, et dans lequel le corps (84) s'étend d'une extrémité radialement interne (114) à une extrémité radialement externe (116) ;
**caractérisé en ce que** :
les fentes coulées (110) sont positionnées radialement vers l'extérieur par rapport aux trous de film percés (112), dans lequel les fentes coulées (110) sont espacées le long de la moitié supérieure d'une étendue radiale du corps (84) et les trous de film (112) sont espacés le long de la moitié inférieure de l'étendue radiale du corps (84), et les trous de film (112) sont plus étroitement espacés au centre du corps qu'à l'extrémité radialement interne (114) ; ou
les fentes coulées (110) sont positionnées radialement vers l'intérieur par rapport aux trous de film percés (112), dans lequel les fentes coulées (110) sont espacées le long de la moitié inférieure d'une étendue radiale du corps (84) et les trous de film (112) sont espacés le long de la moitié supérieure de l'étendue radiale du corps (84), et les trous de film (112) sont plus étroitement espacés à l'extrémité radialement externe (116) qu'au centre du corps.

9. Procédé selon la revendication 8, comprenant :
la formation des fentes coulées (110) pour s'étendre dans la direction axiale et la formation des trous de film percés (112) pour s'étendre selon un angle obtus par rapport aux fentes coulées (110).

10. Procédé selon la revendication 8 ou 9, comprenant l'ajustement des dimensions et de l'espacement des trous de film par rapport aux fentes coulées (110) pour satisfaire les exigences de flux de refroidissement pour une configuration de moteur spécifiée.
